# EUROPÄISCHE PATENTSCHRIFT

(11) **EP 1 908 079 B1**
(45) Veröffentlichungstag und Bekanntmachung des Hinweises auf die Patenterteilung: **30.09.2009**
(21) Anmeldenummer: 06776118.9
(22) Anmeldetag: 04.07.2006
(51) Int. Cl.: G21C 3/322

(54) **BRENNELEMENT FÜR EINEN DRUCKWASSERKERNREAKTOR**
FUEL ELEMENT FOR A PRESSURIZED WATER NUCLEAR REACTOR
ELEMENT COMBUSTIBLE POUR REACTEUR NUCLEAIRE A EAU SOUS PRESSION

(30) Priorität: 26.07.2005 DE 102005035486
(43) Veröffentlichungstag der Anmeldung: 09.04.2008
(73) Patentinhaber: AREVA NP GmbH, 91052 Erlangen (DE)
(72) Erfinder: STABEL, Jürgen, 91058 Erlangen (DE); LIPPERT, Hans-Joachim, 91315 Höchstadt (DE); REN, Mingmin, Dr., 91056 Erlangen (DE); DRESSEL, Bernd, 91052 Erlangen (DE)
(74) Vertreter: Mörtel & Höfner
(86) Internationale Anmeldenummer: PCT/EP2006/006465
(87) Internationale Veröffentlichungsnummer: WO 2007/012380

(56) Entgegenhaltungen:
- EP-A- 1 589 539
- EP-A1- 0 185 219
- WO-A2-20/05059924
- US-A- 4 970 048

## Beschreibung

Die Erfindung bezieht sich auf ein Brennelement für einen Druckwasserkernreaktor.

Aus zahlreichen Inspektionsresultaten ist es bekannt, dass sich die Brennelemente eines Druckwasserkernreaktors im Laufe ihrer Einsatzdauer verbiegen. Ursachen hierfür können beispielsweise eine Anisotropie in der thermischen Ausdehnung oder ein durch radioaktive Strahlung induziertes Längenwachstum der Brennstabhüllrohre oder der Steuerstabführungsrohre sein. Diese Durchbiegungen können im ungünstigen Fall zu einer Schwergängigkeit der Steuerstabführungsrohre oder zu Problemen beim Brennelementwechsel führen. Aufgrund systematischer Durchbiegungen an bestimmten Positionen im Kern können außerdem an bestimmten, jedoch in vielen Fällen unbekannten Stellen des Kernes vergrößerte oder verkleinerte Spalte zwischen den einzelnen Brennelementen oder zwischen Brennelementen, die sich am Rand des Kerns befinden und der Kernumfassung entstehen, die das Brennstoff-Moderator-Verhältnis beeinflussen.

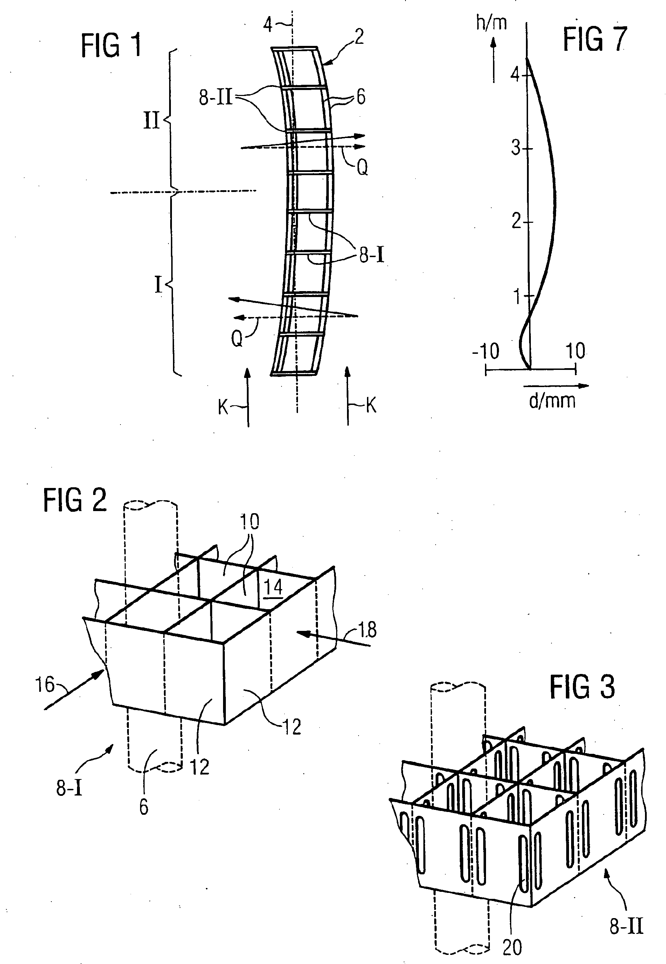

Eine solche in der Praxis beobachtete Durchbiegung oder Verbiegung ist im Diagramm der Fig. 7 dargestellt. In diesem Diagramm ist das Ausmaß der Durchbiegung d in mm gegen die Höhe h des Brennelements in m, gemessen von der unteren Stabhalteplatte an, aufgetragen, wie es sich beispielsweise für ein bestrahltes 18x18-Brennelement ergibt. Der Figur ist zu entnehmen, dass es sich hierbei im wesentlichen um eine C-bogenförmige Durchbiegung (Grundmode) handelt, die bis zu einem gewissen Ausmaß von Durchbiegungen mit höheren Moden, hauptsächlich vom nächsthöheren Mode in Form einer S-förmigen Durchbiegung überlagert ist. Um das Ausmaß solcher Durchbiegungen zu verringern wurde im Stand der Technik versucht, die Brennelemente mechanisch stabiler auszulegen und die Niederhaltekräfte zu verringern.

Alternativ hierzu ist in der WO 2005/059924 A2 vorgeschlagen worden, die auf Brennelemente wirkenden Kräfte durch Verwendung konstruktiv unterschiedlich ausgestalteter Randstege gezielt zu beeinflussen, um auf diese Weise trotz auftretender Durchbiegung eine optimierte Auslegung des Kerns zu ermöglichen.

Der Erfindung liegt nun die Aufgabe zu Grunde, ein Brennelement anzugeben, das im Betrieb eine verringerte Durchbiegung aufweist.

Die genannte Aufgabe wird gemäß der Erfindung gelöst mit einem Brennelement mit den Merkmalen des Patentanspruches 1.

Die Erfindung beruht dabei auf der Beobachtung, dass dem in Längs- oder Axialrichtung des Brennelementes strömenden Kühlwasser aufgrund der im wesentlichen, eingangs erläuterten C-bogenförmigen Durchbiegung des Brennelementes Querströmungskomponenten aufgeprägt werden. Diese senkrecht zur Vertikalen verlaufenden Querströmungskomponenten sind im unteren Bereich des Brennelementes, d.h. in dem Bereich, in dem in Richtung des strömenden Kühlwassers gesehen das Ausmaß der Durchbiegung, d.h. die Auslenkung von einer vertikalen Ideallinie, zunimmt, den Querströmungskomponenten entgegengesetzt gerichtet, die sich aufgrund der nunmehr abnehmenden Auslenkung im Bereich oberhalb des Maximums der Auslenkung einstellen.

In einer besonders einfachen vorteilhaften Ausgestaltung der Erfindung werden bei einem Abstandhalter, dessen Rand durch Randstege gebildet ist, die unterschiedlichen Querströmungswiderstände der Abstandhalter des oberen und des unteren Bereiches dadurch herbeigeführt, dass die Randstege der Abstandhalter des oberen Bereiches in einer Querrichtung gesehen eine kleinere Fläche abdecken als die Randstege der Abstandhalter des unteren Bereichs. Dies führt zu einem signifikant verringerten Querströmungswiderstand der Abstandhalter im oberen Bereich.

Ergänzend hierzu ist in einer weiteren bevorzugten Ausgestaltung der Erfindung vorgesehen, dass bei einem Abstandhalter, der aus einer Mehrzahl von sich kreuzenden Innenstegen aufgebaut ist, auch die Innenstege der Abstandhalter des oberen Bereichs in einer Querrichtung gesehen eine kleinere Fläche abdecken als die Innenstege der Abstandhalter des unteren Bereichs. Durch diese Maßnahme wird die "Transparenz" der Abstandhalter des oberen Bereiches gegenüber der "Transparenz" der Abstandhalter des unteren Bereiches zusätzlich erhöht.

Die kleinere Flächenabdeckung kann grundsätzlich dadurch geschehen, dass die Höhe der Randstege bzw. der Innenstege der Abstandhalter des oberen Bereichs kleiner ist als die Höhe der Rand- bzw. Innenstege der Abstandhalter des unteren Bereichs.

Alternativ oder ergänzend hierzu weisen die Randstege und gegebenenfalls auch die Innenstege der Abstandhalter des oberen Bereichs Öffnungen auf, die entweder größer sind als gegebenenfalls in den Randstegen und Innenstegen der Abstandhalter des unteren Bereichs vorgesehenen Öffnungen. Grundsätzlich ist aber auch eine Ausführungsform denkbar, bei der ausschließlich die Rand- und gegebenenfalls auch die Innenstege des oberen Bereichs Öffnungen aufweisen.

Zur weiteren Erläuterung der Erfindung wird auf die Zeichnung verwiesen. Es zeigen:
- Fig. 1: Ein durchgebogenes Brennelement in einer schematischen Prinzipdarstellung,
- Fig. 2, 3: jeweils einen erfindungsgemäßen Abstandhalter des unteren bzw. oberen Bereichs in einer schematischen perspektivischen Teildarstellung,
- Fig. 4: ebenfalls einen Abstandhalter des oberen Bereiches, in einer schematischen Darstellung,
- Fig. 5, 6: jeweils Abstandhalter des unteren bzw. oberen Bereichs, ebenfalls in einer vereinfachten perspektivischen Teilansicht,
- Fig. 7: ein Diagramm, in dem die Durchbiegung d gegen die Höhe h des Brennelements auftragen ist.

Gemäß Figur 1 weist ein Brennelement 2 eines Druckwasserkernreaktors, bei dem eine Vielzahl von in einer Axial- oder Längsrichtung 4 ausgedehnten Brennstäben 6 in einer Mehrzahl axial voneinander beabstandeter Abstandhalter 8-1, 8-II geführt ist, im Betriebszustand eine Verformung in Gestalt einer C-bogenförmigen Durchbiegung auf, die aus einem elastischen Anteil und einem mit zunehmender Einsatzzeit zunehmenden plastischen Anteil zusammengesetzt ist. Da das Brennelement 2 nicht von einem Kasten umgeben ist, kann das am Brennelement 2 entlang zwischen benachbarten Brennelementen nach oben strömende Kühlwasser K zwischen benachbarten Abstandhaltern 8-I, 8-II in des Brennelement 2 einströmen und einen an sich erwünschten horizontalen Queraustausch von Kühlwasser ermöglichen.

Bei dem in Form eines (spiegelverkehrten) C durchgebogenen Brennelement 2 ergeben sich nun aufgrund seiner gebogenen Form systematische Querströmungen Q, die in einem unteren Bereich I den in einem oberen Bereich II entstehenden Querströmungen Q entgegengesetzt sind. Während die im unteren Bereich I entstehenden Querströmungen eine Kraft auf das Brennelement 2 ausüben, die bewirken, dass das Ausmaß der Durchbiegung in diesem unteren Bereich I reduziert wird, bewirken die im oberen Bereich II entgegengesetzt gerichteten Querströmungen Q eine Erhöhung der Durchbiegung, so dass sich in der Praxis die eingangs anhand von Figur 7 erläuterte Überlagerung der C-bogenförmigen Durchbiegung mit einer S-förmigen Durchbiegung ergibt.

Diese im oberen Bereich II des Brennelements 2 auftretenden Querströmungen führen demzufolge zu einem instabilen Verhalten, da ihr Ausmaß und damit die von ihnen auf das Brennelement 2 ausgeübten Kräfte mit zunehmender Durchbiegung ebenfalls zunehmen.

Die Erfindung beruht nun auf der Überlegung, dass das Ausmaß der im oberen Bereich II entstehenden Kräfte und damit die Tendenz zur Instabilität und zum Ausbilden einer plastischen Verformung verringert werden kann, wenn dafür Sorge getragen wird, dass die im oberen Bereich II angeordneten Abstandhalter 8-II der Querströmung Q einen geringeren Strömungswiderstand entgegensetzen als die im unteren Bereich I befindlichen Abstandhalter 8-1. Mit anderen Worten: Bei den unteren Abstandhaltern 8-1 ist ein hoher Widerstand gegen Querströmungen von Vorteil, da die durch diese Querströmungen verursachten Kräfte die Durchbiegung verringern, während die im oberen Bereich II auf die Abstandhalter 8-II ausgeübten Querkräfte möglichst gering sein sollen, um dort ihren Einfluss auf das Ausmaß der Durchbiegung weitgehend zu minimieren.

In der Figur 1 ist eine Situation eingezeichnet, in der die Grenze zwischen dem unteren Bereich I und dem oberen Bereich II nicht exakt in der Mitte des Brennelements 2 verläuft, so dass im Ausführungsbeispiel bei neun Abstandhaltern 8-1, 8-II die fünf untersten Abstandhalter 8-I dem unteren Bereich I und die restlichen vier Abstandhalter 8-II dem oberen Bereich II zuzuordnen sind. Die Grenze zwischen dem unteren Bereich I und dem oberen Bereich II ist anlagenspezifisch von Brennelementtyp zu Brennelementtyp verschieden und sollte etwa in dem Bereich liegen, in dem das Maximum der Durchbiegung vorliegt.

Gemäß Fig. 2 ist ein Abstandhalter 8-1 des unteren Bereichs I aus einer Mehrzahl von sich kreuzenden Innenstegen 10 aufgebaut. Der Rand des Abstandhalters 8-1 ist durch Randstege 12 gebildet. Durch die sich kreuzenden Innenstege 10 und die Randstege 12 werden quadratische Gitterzellen 14 gebildet, durch die die Brennstäbe 6 hindurch geführt sind. In der vereinfachten Darstellung der Figur sind die an den Innenstegen und Randstegen 10 bzw. 12 jeweils zur Lagerung der Brennelemente angeordneten Noppen und Federelemente sowie gegebenenfalls vorhandene Leit- oder Drallfahnen oder bei doppelwandigen Abstandhaltern vorhandene, axial verlaufende Strömungskanäle aus Gründen der Übersichtlichkeit nicht dargestellt.

Der Figur ist nun zu entnehmen, dass die Randstege 12 und die Innenstege 10 des Abstandhalters 8-1 des unteren Bereichs geschlossen sind, d.h. keine Durchgangsöffnungen aufweisen und auf diese Weise in jeder Querrichtung 16, 18 gesehen eine große Fläche abdecken und einen hohen Strömungswiderstand aufweisen, so dass das vertikal strömende Kühlwasser bei einer als Folge einer Durchbiegung des Brennelementes entstehenden Neigung oder Schrägstellung eines der Randstege gegen das anströmende Kühlwasser eine hohe Querkraft ausübt, die versucht, diese Durchbiegung zu kompensieren.

Demgegenüber ist gemäß Figur 3 bei einem Abstandhalter 8-II des oberen Bereichs vorgesehen, sowohl die Innenstege 10 als auch die Randstege 12 bei im übrigen gleicher Bauhöhe mit Öffnungen 20 zu versehen, die einen in Querrichtung gegenüber dem Abstandhalter 8-I (Fig. 2) verringerten Strömungswiderstand zur Folge haben und eine Querströmung des Kühlwassers auch im Abstandhalter 8-II ermöglichen, so dass die vom Kühlwasser auf den Abstandhalter 8-II ausgeübten Querkräfte entsprechend verringert sind.

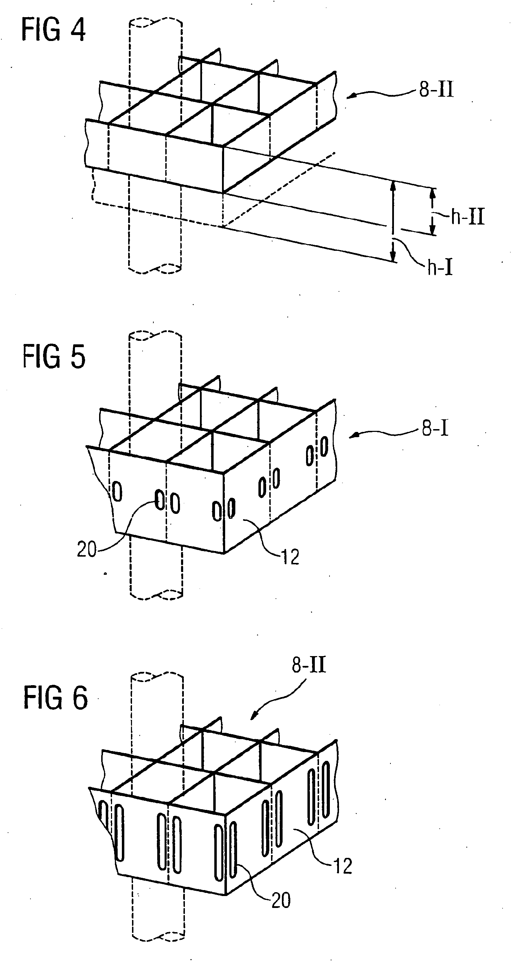

Alternativ zu der in Fig. 3 dargestellten Ausführungsform kann ein verringerter Abdeckungsgrad eines Abstandhalters 8-II des oberen Bereichs gemäß Fig. 4 auch dadurch erzielt werden, dass die Höhe h-II der Innen- und Randstege 10 bzw. 12 verringert ist. Diese verringerte Höhe h-II ist in der Figur anhand des gestrichelt eingezeichneten Abstandhalters 8-1 des unteren Bereichs mit der größeren Höhe h-I veranschaulicht.

In der Ausführungsform gemäß Figuren 5 und 6 enthalten sowohl die Abstandhalter 8-1 des unteren Bereichs als auch die Abstandhalter 8-II des oberen Bereiches Öffnungen 20-1 bzw. 20-II in den Randstegen 12, wobei in diesem Fall die Fläche der Öffnungen 20-II des Abstandhalters 8-II des oberen Bereichs größer ist als die Fläche der Öffnungen 20-1 des Abstandhalters 8-1 des unteren Bereichs. Ergänzend zu den Figuren 5 und 6 dargestellten Ausführungsformen können auch die Innenstege 10 mit Öffnungen versehen sein, wobei auch in diesem Fall die in den Innenstegen des Abstandhalters des unteren Bereichs vorgesehenen Öffnungen kleiner sind als die in den Innenstegen des Abstandhalters 8-II des oberen Bereichs vorgesehenen Öffnungen.

## Patentansprüche

1. Brennelement (2) für einen Druckwasserkernreaktor, bei dem eine Vielzahl von in einer Längsrichtung (4) ausgedehnten Brennstäben (6) in einer Mehrzahl axial voneinander beabstandeter Abstandhalter (8-1, 8-II) geführt sind, wobei das Brennelement (2) aus einem unteren Bereich (I) und einem daran anschließenden oberen Bereich (II)besteht, und wobei im unteren Bereich (I) und im oberen Bereich (II) jeweils eine Mehrzahl von Abstandhaltern (8-I,8-II) angeordnet ist, **dadurch gekennzeichnet, dass** die Abstandhalter (8-II) des oberen Bereiches (II) in einer zur Längsrichtung (4) senkrechten Querrichtung (16, 18) einen geringeren Strömungswiderstand aufweisen als die Abstandhalter (8-1) des unteren Bereiches.

2. Brennelement nach Anspruch 1, bei dem ein seitlicher Rand der Abstandhalter (8-1, 8-II) durch Randstege (12) gebildet ist, wobei die Randstege (12) der Abstandhalter (8-II) des oberen Bereiches (II) in einer Querrichtung (16,18) gesehen eine kleinere Fläche abdecken als die Randstege (12) der Abstandhalter (8-1) des unteren Bereiches (I).

3. Brennelement nach Anspruch 2, bei dem die Abstandhalte (8-1, 8-II) aus einer Mehrzahl von sich kreuzenden Innenstegen (10) aufgebaut sind, wobei die Innenstege (10) der Abstandhalter (8-II) des oberen Bereiches (II) in einer Querrichtung (16, 18) gesehen eine kleinere Fläche abdecken als die Innenstege (10) der Abstandhalter (8-1) des unteren Bereiches (I).

4. Brennelement nach Anspruch 2 oder 3, bei dem ausschließlich die Abstandhalter (8-II) des oberen Bereiches (II) mit Öffnungen (20) versehene Randstege (12) aufweisen.

5. Brennelement nach Anspruch 2 oder 3, bei dem alle Abstandhalter (8-1, 8-II) mit Öffnungen (20) versehene Randstege (12) aufweisen, wobei die Gesamtfläche der Öffnungen (20) der Randstege (12) der Abstandhalter (8-II) des oberen Bereiches (II) größer sind als die Gesamtfläche der Öffnungen (20) der Randstege (12) der Abstandhalter (8-1) des unteren Bereiches (I).

6. Brennelement nach einem der Ansprüche 2 bis 5, bei dem ausschließlich die Abstandhalter (8-11) des oberen Bereiches (II) mit Öffnungen (20) versehene Innenstege (10) aufweisen.

7. Brennelement nach einem der Ansprüche 2 bis 5, bei dem alle Abstandhalter (8-1, 8-II) mit Öffnungen(20) versehene Innenstege (10) aufweisen, wobei die Gesamtfläche der Öffnungen (20) der Innenstege (10) der Abstandhalter (8-II) des oberen Bereiches (II) größer sind als die Gesamtfläche der Öffnungen (20) der Innenstege (10) der Abstandhalter (8-1) des unteren Bereiches (I).

## Claims

1. Fuel assembly (2) for a pressurized-water nuclear reactor, in which a large number of fuel rods (6) which extend in a longitudinal direction (4) are guided in a plurality of axially spaced apart spacers (8-1, 8-II), wherein the fuel assembly (2) comprises a lower region (I) and an upper region (II) which adjoins the former, and wherein in each case a plurality of spacers (8-1, 8-II) are arranged in the lower region (I) and in the upper region (II), **characterized in that** the spacers (8-II) in the upper region (II) have a lower flow resistance in a transverse direction (16, 18) which is perpendicular to the longitudinal direction (4) than the spacers (8-1) in the lower region.

2. Fuel assembly according to, Claim 1, in which a lateral edge of the spacers (8-I, 8-II) is formed by edge webs (12), wherein the edge webs (12) of the spacers (8-II) in the upper region (II), when viewed in a transverse direction (16, 18), cover a smaller area than the edge webs (12) of the spacers (8-I) in the lower region (I).

3. Fuel assembly according to Claim 2, in which the spacers (8-I, 8-II) are made of a plurality of intersecting inner webs (10), wherein the inner webs (10) of the spacers (8-II) in the upper region (II), when viewed in a transverse direction (16, 18), cover a smaller area than the inner webs (10) of the spacers (8-1) in the lower region (I).

4. Fuel assembly according to Claim 2 or 3, in which only the spacers (8-II) in the upper region (II) have edge webs (12) which are provided with openings (20).

5. Fuel assembly according to Claim 2 or 3, in which all of the spacers (8-I, 8-II) have edge webs (12) which are provided with openings (20), wherein the total area of the openings (20) in the edge webs (12) of the spacers (8-II) in the upper region (II) is larger than the total area of the openings (20) in the edge webs (12) of the spacers (8-1) in the lower region (I).

6. Fuel assembly according to one of Claims 2 to 5, in which only the spacers (8-II) in the upper region (II) have inner webs (10) which are provided with openings (20).

7. Fuel assembly according to one of Claims 2 to 5, in which all of the spacers (8-I, 8-II) have inner webs (10) which are provided with openings (20), wherein the total area of the openings (20) in the inner webs (10) of the spacers (8-II) in the upper region (II) is larger than the total area of the openings (20) in the inner webs (10) of the spacers (8-1) in the lower region (I).

## Revendications

1. Elément de combustible (2) pour réacteur nucléaire refroidi par de l'eau sous pression, dans lequel une pluralité de barres de combustible (6) étendues dans une direction longitudinale (4) sont guidées dans une pluralité d'écarteurs (8-I, 8-II) espacés axialement les uns des autres, dans lequel l'élément de combustible (2) est constitué d'une région inférieure (I) et d'une région supérieure (II) s'y rattachant, et dans lequel dans la région inférieure (I) et dans la région supérieure (II) une pluralité respective d'écarteurs (8-I, 8-II) est disposée, **caractérisé en ce que** les écarteurs (8-II) de la région supérieure (II) présentent dans une direction transversale (16,18) perpendiculaire à la direction longitudinale (4) une résistance à l'écoulement plus petite que les écarteurs (8-1) de la région inférieure.

2. Elément de combustible selon la revendication 1, dans lequel un bord latéral de l'écarteur (8-I, 8-11) est formé par des gradins de bord (12), dans lequel les gradins de bord (12) de l'écarteur (8-II) de la région supérieure (II), vus dans une direction transversale (16,18) recouvrent une surface plus petite que les gradins de bord (12) de l'écarteur (8-I) de la région inférieure (I).

3. Elément de combustible selon la revendication 2, dans lequel les écarteurs (8-I,8-II) sont composés d'une pluralité de gradins intérieurs (10) se croisant, dans lequel les gradins intérieurs (10) de l'écarteur (8-II) de la région supérieure (II), vus dans une direction transversale (16,18) recouvrent une surface plus petite que les gradins intérieurs (10) des écarteurs (8-1) de la région inférieure (I).

4. Elément de combustible selon la revendication 2 ou 3, dans lequel exclusivement les écarteurs (8-II) de la région supérieure (II) présentent des gradins de bord (12) pourvus d'ouvertures (20).

5. Elément de combustible selon la revendication 2 ou 3, dans lequel tous les écarteurs (8-I,8-II) présentent des gradins de bord (12) pourvus d'ouvertures (20), dans lequel la surface totale des ouvertures (20) des gradins de bord (12) des écarteurs (8-II) de la région supérieure (II) est plus grande que la surface totale des ouvertures (20) des gradins de bord (12) des écarteurs (8-I) de la région inférieure (I).

6. Elément de combustible selon une des revendications 2 à 5, dans lequel exclusivement les écarteurs (8-II) de la région supérieure (II) présentent des gradins intérieurs (10) pourvus d'ouvertures (20).

7. Elément de combustible selon une des revendications 2 à 5, dans lequel tous les écarteurs (8-I,8-II) présentent des gradins intérieurs (10) pourvus d'ouvertures (20), dans lequel la surface totale des ouvertures (20) des gradins intérieurs (10) des écarteurs (8-II) de la région supérieure (II) est plus grande que la surface totale des ouvertures (20) des gradins intérieurs (10) des écarteurs (8-I) de la région inférieure (I).
